# EUROPEAN PATENT APPLICATION

(11) **EP 4 693 086 A1**
(43) Date of publication of application: **11.02.2026**
(21) Application number: 24193162.5
(22) Date of filing: 06.08.2024
(51) Int. Cl.: G06F 21/62, G06N 3/045, G06N 3/08

(54) **SYSTEM FOR PROTECTING PRIVACY OF TRAINING DATA IN A MULTI-MODAL INDUSTRIAL FOUNDATION MODEL**

(71) Applicant: Siemens Aktiengesellschaft, 80333 München (DE)
(72) Inventor: Liu, Yushan, 81737 München (DE)
(74) Representative: Siemens Patent Attorneys

(57) **Abstract**

System and computer-implemented method for protecting privacy of training data provided by different data providers to train a multi-modal industrial foundation model (IFM), which is applied for different industrial tasks by different users, comprising the steps:
performed by a data sensitivity module (21),
• identify (S1) sensitive data (SD) from multi-modal training data input from different data providers and to assign at least one of several different sensitivity types (T) to the sensitive data (SD),
• preprocess (S2) the sensitive data (SD) depending on a modality (M) and the sensitivity type (T) of the sensitive data (SD),

b) performed by a model training module (22), train the industrial foundation model by
• training (S3) an encoder (EN, 221) and a projection module (222) for modality alignment using pre-processed sensitive data (SPp) and non-sensitive data (nSD) of the training data accessible for all users,
• training (S4) a large language model (LLM, 223) by inputting tokens (224) generated by the encoder (EN, 221),

c) performed by a model inference module (12),
• receive (S5) a query (230) via a user interface and input the query to the trained industrial foundation model, which generates an output (231) depending on the query (230),
• automatically input (S6) a system message prompt instructing the industrial foundation model to not output any training data-related information to an output interface,
• calculate (S7) similarity metrics which are derived from a comparison between the generated output (231) provided by the industrial foundation model and the training data, and
• provide (S8) a refined output (234) of the generated output (231) depending on the similarity metrics to an output device.

## Description

### Field of the Invention

The present disclosure relates to a system and computer-implemented method for protecting privacy of training data in a multi-modal industrial foundation model (IFM), which is applied by different users.

### Background

A foundation model, also known as large artificial intelligence (Al) model, is a machine learning or deep learning model that is trained on broad data such that it can be applied across a wide range of use cases. Foundation models like large language models (LLMs) have transformed Al, powering prominent generative AI applications like ChatGPT.

Large language models (LLMs) are used for a wide variety of tasks, exhibiting great performance and generalizability in natural language understanding and generation. Even though most large language models are based on textual input, recent efforts also focus on the development of multi-modal models, which, e.g., can take images or timeseries of sensor data as part of the input prompt. To better adapt LLMs to specific use cases, like industrial applications, fine-tuning approaches have been introduced. The training of an industrial foundation model in particular requires large amounts of diverse and representative data to inject the existing knowledge of the industrial domain into the model.

Industrial data are typically not publicly available but are the intellectual property of specific companies, which do not wish to share the data. The data might contain sensitive information such as internal know-how or trade secrets. To train a powerful industrial LLM, which performs well on different industrial use cases, a collection of disparate training data is essential. This data could be sourced from multiple companies, but a prerequisite is usually that the data used for training should enhance the model's performance regarding the own use case without being available to other users of the model.

The main problem is the capability of LLMs to memorize training data. In many cases, LLMs are able to generate exact training data, either unintentional or as a response to an attack, e.g., a jailbreak attack, a membership inference attack, or a training extraction attack. Especially malicious attacks aim at circumventing guardrails set in place, like a safety alignment. Therefore, thorough data protection is important to prevent the leakage of sensitive information.

Therefore, it is an object of the present invention to provide a system and method which allows to train an industrial foundation model with different types of data of different industrial use cases provided by different data owners to achieve reliable output and preventing any output comprising the sensitive data by the trained industrial foundation model.

### Brief Summary of the Invention

This object is solved by the features of the independent claims. The dependent claims contain further embodiment of the invention.

A first aspect concerns a system for protecting privacy of training data provided by different data providers to train a multi-modal industrial foundation model (IFM), which is applied for different industrial tasks by different users, comprising a data sensitivity module, a model training module and an evaluation module.

The data sensitivity module is configured to
- identify sensitive data from multi-modal training data input from different data providers and to assign at least one of several different sensitivity types to the sensitive data,
- preprocess the sensitive data depending on a modality and the sensitivity type of the sensitive data.

The model training module is configured to train the industrial foundation model by
- training an encoder and a projection module for modality alignment with non-sensitive data of the training data accessible for all users using non-sensitive multi-modal training data,
- training a large language model by inputting tokens generated by the encoder.

The model inference module is configured to
- receive a query via a user interface and input the query to the trained industrial foundation model, which generates an output depending on the query,
- automatically input a system message prompt in-structing the industrial foundation model to not output any training data-related information to an output interface,
- calculate similarity metrics which are derived from a comparison between the generated output provided by the industrial foundation model and the training data, and
- provide a refined output of the generated output depending on the similarity metrics to an output device.

A second aspect of the invention concerns a computer implemented method for protecting privacy of training data provided by different data providers to train a multi-modal industrial foundation model (industrial foundation model), which is applied for different industrial tasks by different users, comprising the steps:
a) performed by a data sensitivity module,
   - identify sensitive data from multi-modal training data input from different data providers and to assign at least one of several different sensitivity types to the sensitive data,
   - preprocess the sensitive data depending on a modality and the sensitivity type of the sensitive data,
b) performed by a model training module,
   - training an encoder and a projection module for modality alignment with non-sensitive data of the training data accessible for all users using non-sensitive multi-modal training data,
   - training a large language model by inputting tokens generated by the encoder,
c) performed by a model inference module,
   - receive a query via a user interface and input the query to the trained industrial foundation model, which generates an output depending on the query,
   - automatically input a system message prompt in-structing the industrial foundation model to not output any training data-related information to an output interface,
   - calculate similarity metrics which are derived from a comparison between the generated output provided by the industrial foundation model and the training data, and
   - provide a refined output of the generated output depending on the similarity metrics to an output device.

A third aspect of the invention concerns a computer program product directly loadable into an internal memory of at least one digital computer, comprising software code portions for performing the steps of the computer-implemented method when said product is run on said at least one digital computer.

Advantageously, the presented invention implements data protection measures not only during data preparation or during model training, but also during model inference, i.e., application of the industrial foundation model for control, maintenance task or engineering tasks. Thus, it supports provision of a multitude of training data from different data sources covering wide range of industrial tasks and aspects.

It provides a comprehensive data privacy evaluation and respective data protection measures preventing data leakage in every stage of use along the lifecycle of the industrial foundation model. The system is very flexible by providing different protection mechanisms depending on the data modality and sensitivity type. The data privacy and data protection measures consider data of multiple modalities like text, image, video, multi-variant timeseries of sensor data as input, which cover the complete set of data processed in an industrial environment. In result, the trained industrial foundation model provides reliable output in a variety of use cases, and it provides trust to providers of training data that the provided data are not leaked and provided to unintended third parties using the trained IFM in the system.

### Description of Embodiments

In an embodiment the system comprises an administration interface which is configured to receive information on the different types of sensitivity depending on the modality of the received training data from the data provider.

This allows a domain expert or the source of the input training data to define the sensitivity types which individually fit to the demand of the data source / data provider. New sensitivity types can be defined depending on the type, structure and content of the provided training data.

In an embodiment, the system automatically classifies the multi-modal training data into non-sensitive data and sensitive data and/or automatically classifies the sensitive data into classes assigned for each of the different types of sensitivity.

This reduces the manual effort and reduces cost and time for classifying the training data.

In an embodiment the system is configured to preprocess the sensitive data comprises at least one of anonymization, pseudonymization, aggregation, and encryption.

Advantageously, a variety of different data protection methods are applied already before the training data are provided to the foundation model to be trained. For each of the different types of sensitivity the most adequate data protection method can be selected. This provides flexibility with respect to the various modalities of industrial data and data source demands.

In an embodiment the system is configured to generate synthetic data based on the sensitive data resembling the multi-modal training data without including any sensitive information.

The generation of synthetic data is possible due to the comprehensive knowledge of the type of sensitivity of the received sensitive training data and the respective protection measures sensitive data.

In an embodiment the system is configured to train the large language model with training data comprising non-sensitive data, preprocessed sensitive data, and synthetic data.

This allows a refinement and quality enhancement of the industrial foundation model due to enhanced amount of training data. Using synthetic data makes it harder to recognize sensitive knowledge from the trained industrial foundation model.

In an embodiment the defense mechanisms are at least one of differential privacy, regularization, reinforcement learning and federated learning.

Advantageously, these defense mechanisms enable to prevent memorization and overfitting as well as to decrease the probability of the generation of training data-related content.

In an embodiment the system is configured to train a second encoder and a second projection module for modality alignment with identified sensitive data (SD) accessible only for specific users, which are allowed to use the identified sensitive data, preferably accessible for a data provider of the sensitive data (SD) and training a large language model by additionally inputting tokens generated by the second encoder.

This enables to train the IFM with sensitive and non-sensitive data but restricting the access of the IFM to users with specific access rights. Preferably data provider of the sensitive training data are such specific users. The resulting trained IFM generates output taking into account in addition all the sensitive data.

In an embodiment the system comprises a first retrieval-augmented generation system consisting of a first database, providing context information based on non-sensitive data depending on the input query, and generating a prompt combining the query with the context information for input into the LLM.

The first retrieval-augmented generation system enriches the prompt limited to context information of non-sensitive data only. Thus, no privacy related information is added via the RAG unit to the prompt.

In an embodiment the system comprises a second retrieval-augmented generation system accessible only by users which are authorized by the data provider, consisting of a second database providing context information based on sensitive data depending on the input query, generating a prompt combining the query with the provided context information for input into the LLM.

Especially, the access to the second RAG unit is restricted to at least one data provider of the sensitive data. The second RAG unit is physically separated from the first RAG unit.

The second retrieval-augmented generation system enriches the prompt with context information related to sensitive data but is accessible only by users which are authorized by the data providers. This allows differentiation between users of the system.

In an embodiment the system is configured to train the large language model including defense mechanisms to prevent memorization, overfitting and decrease generation of training data-related output.

Thus, the LLM itself is optimized to support the privacy of the training data.

In an embodiment the system is configured to provide an industrial task is one of controlling, monitoring, maintaining, modelling, engineering at least one device or process in an industrial environment, preferably in an automation plant.

Thus, the foundation model is trained to industrial tasks and optimized to ensure data privacy of training data provided by data providers.

### Brief description of the drawings

The invention will be explained in more detail by reference to accompanying figures. Similar objects will be marked by the same reference signs.
- Figure 1: shows an embodiment of the inventive method as flow diagram.
- Figure 2: schematically illustrates an embodiment of the inventive system configured to perform the inventive method.
- Figure 3: schematically illustrates examples of privacy preserving methods depending on the modality of sensitive data.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional modules can be implemented by dedicated hardware, e.g., processor, firmware or by software, and/or by a combination of dedicated hardware and firmware and software. It is further noted that each functional modules described for an apparatus can perform a functional step of the related method and vice versa.

### Description of Examples

A system and method are proposed which provides a data protection framework for a multi-modal industrial foundation model (IFM) to protect sensitive information in training data that are provided from different data providers for training the industrial foundation model. The industrial foundation model is trained on training data from multiple data providers and is used by users, which are the same as the data providers but also users which have not training data for the industrial foundation model. The training data for a multi-modal industrial foundation model comprises not only language in written or audio form but also images, timeseries of sensor data, design drawings and furthermore.

The industrial foundation model is an Artificial Intelligence-based tool which for example generates engineering information based on a CAD model which was input to the industrial foundation model. Depending on a prompt, i.e., a question input to the industrial foundation model, relating to the input CAD model, the industrial foundation model can provide information. Example prompt-provided information pairs are:
- What is it? -> Description of depicted object
- How many faces does it have? -> Number of faces
- What machining features does the model have? -> List of machining features and number of occurrences
- What tools and operations are need for this feature? -> Sequence of operations and associated tools
- What machining strategy is needed to create the model? -> Sequence of operations

Further end-to-end use cases are inputting a computer-aided Manufacturing information to the industrial foundation model which in turn outputs a CAD model to provide the requested design. Subsequently inputting a bill of materials (BOM) to the industrial foundation model and receiving in return from the IFM a bill of processes (BOP).

Further use cases are inputting into the industrial foundation model a process flow chart and receiving as output the different processing devices and/or device settings. Inputting timeseries of sensor data and the device the data were collected from and receiving an indication of the operation mode or fault of the device. Or inputting to the industrial foundation model a specific error code of a device and receiving as output instructions like changed device settings to resolve the error. I.e., the industrial foundation model is trained to support in or fulfil manifold tasks in an industrial environment like controlling, monitoring, maintaining, modelling, engineering at least one device or process, e.g., in an automation plant.

The industrial foundation model comprises an encoder, a projection layer for modality alignment and a large language model. The encoder is designed to learn embeddings that preserve the relevant information from the data and can be used for various predictive modeling tasks such as classification. The modality alignment in multimodal machine learning is crucial for synchronizing and correlating data from different modalities-such as audio, visual, textual, and timeseries of sensor data inputs ensuring that these diverse forms of data can be effectively integrated and interpreted. The large language model, also known as LLM, is a very large deep learning model that is pre-trained on vast amounts of data. An underlying transformer is a set of neural networks that consist of an encoder and a decoder with self-attention capabilities.

The training of the industrial foundation model requires large amounts of diverse and representative data to inject the existing knowledge of the industrial domain into the model. The provided system and method provide data protection approaches along the machine learning lifecycle and focuses on three stages, i.e., data preparation, model training, and model inference. Depending on the data modality and sensitivity type, different protection mechanisms are applied, while certain mechanisms are always in-place to alleviate the problem of memorization.

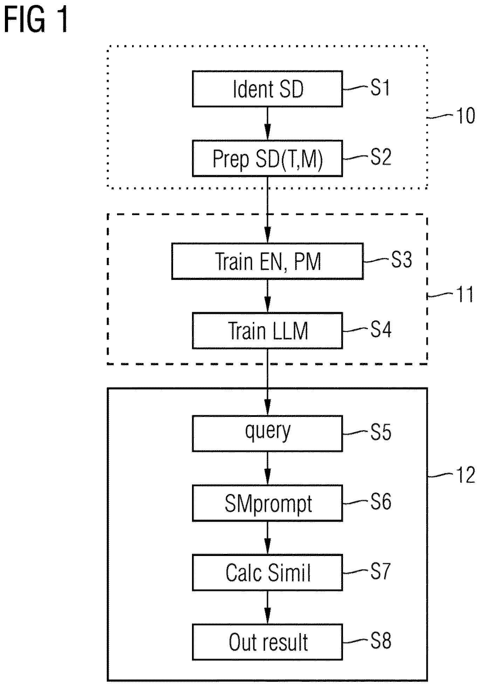

The proposed method for protecting privacy of training data provided by different data providers to train the multi-modal industrial foundation model (IFM) is depicted in Fig.1 and described in the following. The method focuses on the three stages data preparation, model training, and model inference. Depending on the data modality and sensitivity type, different protection mechanisms are applied, while certain mechanisms are always in-place to alleviate the problem of memorization.

In the data preparation stage 10, following steps are performed by a data sensitivity module. In a first step S1, sensitive data SD are identified from multi-modal training data, which are input from different data providers and at least one of several different sensitivity types T is assigned to the sensitive data SD. The sensitive data SD is pre-processed depending on a modality M and the sensitivity type T of the sensitive data SD resulting in pre-processed sensitive data SDp. Pre-processing is performed such that sensitive information in the identified sensitive data SD is eliminated or obfuscated, i.e., not accessible to the public any longer, see step S2. E.g., sensitive information in text is redacted or anonymized.

In a training stage 11, an encoder EN1 and a projection module PM1 of the industrial foundation model are trained for modality alignment with pre-processed sensitive data SDp and non-sensitive data nSD of the training data accessible for all users, see S3. In an embodiment a second encoder and a second projection module are trained for modality alignment with sensitive data SD accessible only for specific users, which are allowed to use identified sensitive data. The large language model LLM is trained by inputting tokens generated by the encoder EN1 and modality alignment PM1 and/or second encoder and second modality alignment, see S4. A token is the smallest meaningful unit of text, which can be a word, a syllable, or even a character, and is used as the basic building block for text analysis and natural language processing tasks. Similarly, token for input data of other modality than text, e.g., image or timelines of data, are basic building blocks for image or timeline analysis and the respective processing tasks.

In a model inference stage 12, i.e., during application of the trained industrial foundation model, a query is received via a user interface. The query is input to the trained industrial foundation model, which generates an output depending on the query, see step S5. In addition to the query,
a system message prompt SMprompt is automatically input instructing the industrial foundation model to not output any training data-related information to an output interface, see S6. This system message prompt "forbids" the industrial foundation model to generate an output which discloses even parts of sensitive data. Thus, the system message prompt prevents an output of sensitive data via the user interface. At least one, preferably several, similarity metrics are calculated which is derived from a comparison between the generated output provided by the industrial foundation model and the training data, see S7. Finally, a refined output of the generated output is provided depending on the similarity metrics to an output device, see S8.

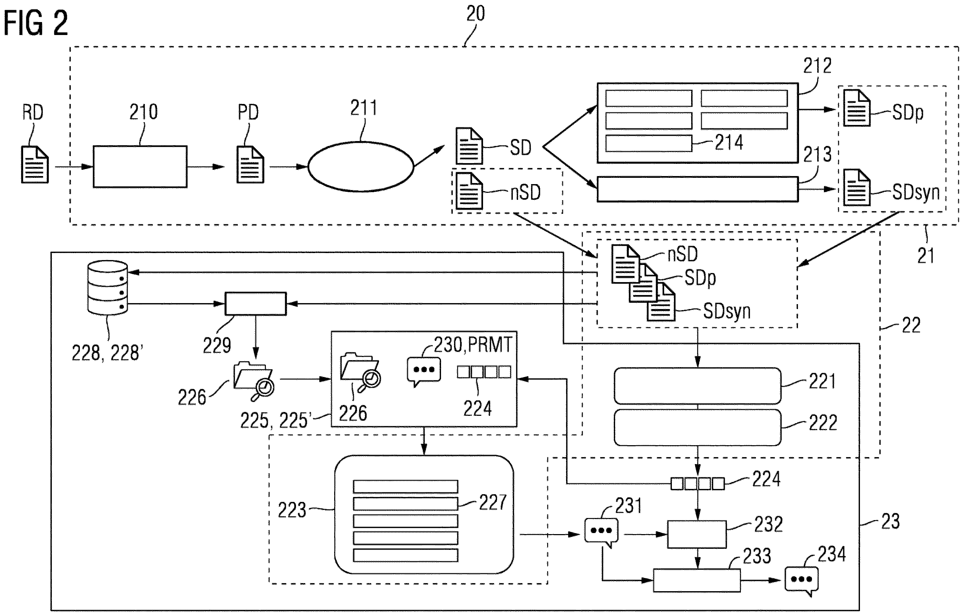

Fig. 2 shows an embodiment of the inventive system 20 configured to protect privacy of training data, which are provided by different data providers to train a multi-modal industrial foundation model. The system 20 comprises three modules covering functionalities performed in the different stages of the industrial foundation model's lifecycle. Depending on the data modality and sensitivity type, different protection mechanisms are applied, while certain mechanisms are always in-place to alleviate the problem of memorization. A data sensitivity module 21, see dotted line, configured to perform data preparation of the training data, a model training module 22, see dashed line, configured to perform functions for training the industrial foundation model and a model inference module 23, see solid line, configured to perform functions during the application of the application of the industrial foundation model in an industrial environment.

The data sensitivity module 21 optionally comprises a preprocessing unit 210 in which raw data RD of the multi-modal training data is automatically pre-processed and transformed into pre-processed data PD which have a standard format and structure that is compatible with the definition of the Artificial intelligence (Al) model the industrial foundation model is based on.

The data sensitivity module 21 comprises a data sensitivity assessment unit 211 which is configured to identify sensitive data instances SD and non-sensitive data instances nSD from the multi-modal training data and to assign at least one of several different sensitivity types T to the sensitive data instances SD. For the sensitive data instances SD the type of sensitivity is determined. Types of sensitivity are, e.g., a representation of an identity of a device, person, or similar in text, objects in images, text in images, specific design in 3D-design models.

This is partly a manual step that is based on discussions with the provider of the training data and a common understanding of the training data. The system comprises an administration interface which is configured to receive information on the different types of sensitivity T depending on the modality M of the received training data from the data provider. Given enough knowledge about an industrial domain out of which the training data is sampled, the data sensitivity assessment unit 211 comprises an assignment unit which automatically performs a classification of the training data into sensitive data instances SD and non-sensitive data instances nSD. Optionally, the data sensitivity assessment unit 211 automatically classifies the sensitive data instances SD into classes assigned for each of the different types of sensitivity T and/or modality M.

The sensitivity assessment in the sensitivity assessment unit 211 could also be performed before the raw data preprocessing in the preprocessing unit 210.

The sensitive data instances SD are pre-processed in a sensitive data pre-processing unit 212 depending on the assigned data modality M and sensitivity type T, resulting in privacy pre-processed sensitive data SDp. E.g., sensitive information in text is redacted or anonymized. The sensitive data pre-processing unit 212 comprises further privacy preserving methods 214 which are applied to the sensitive data instances SD depending on the sensitivity type T and modality M of the data instances. Some of these privacy preserving methods 214 are anonymization, pseudonymization, aggregation, encryption, and furthermore. The anonymisation method removes identifiable information from data sets, so that the devices, organization, etc. whom the data describe remain anonymous. The pseudonymization method replaces identifiable information fields within a data record by one or more artificial identifiers, or pseudonyms. Data aggregation methods aggregate different data instances or data sets in a way that obfuscates the source of the single data instance or data set. The encryption method encodes the data instances, e.g., by a secret key or by an encryption function, resulting in encrypted data which are only readable by parties which pose the secret key or knowledge of the function.

In an embodiment, synthetic data SDsyn are generated, which resemble the original training data but do not include any sensitive information. The data sensitivity module 21 comprises a synthetic data generation unit 213. Generating synthetic data SDsyn is of advantage because the synthetic data SDsyn are used as training data instead of sensitive data SD. As the sensitive data SD are not used for training the industrial foundation model, the sensitive data SD cannot be extracted from the deployed industrial foundation model. Using synthetic sensitive data SDsyn either alone or in addition to privacy pre-processed sensitive data instances SDp increases the amounts of training data and is usually beneficial for model performance. Further, data augmentation is performed. Data augmentation is a statistical technique which allows maximum likelihood estimation from incomplete data. Data augmentation is widely used in machine learning to reduce overfitting when training machine learning models, achieved by training models on several slightly-modified copies of existing data. Additionally, for external users of the industrial foundation model, it is difficult to distinguish between real and synthetic data and thus harder to recognize sensitive knowledge.

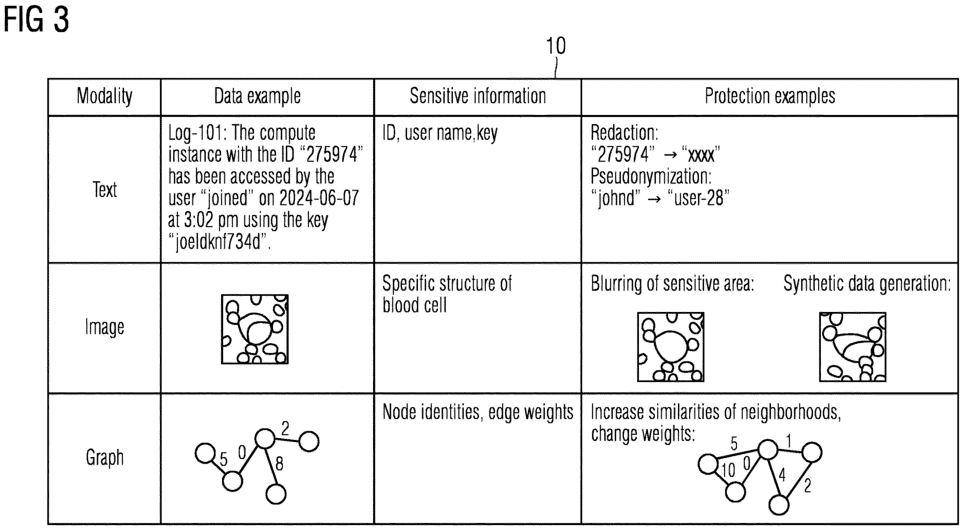

Examples of privacy preserving methods depending on the modality of the sensitive data SD are shown in Fig. 3. Sensitive data of modality "text" comprises sensitive information like an identifier ID, a username and a key. Here data redaction is preformed substituting the identifier ID by a string without privacy information. The username is substituted by a non-identifying name, here "user-28". The data instance example of modality image comprises specific structure of blood cells which is a sensitive information. This sensitive information is obscured by blurring sensitive areas or generating synthetic data. Data of modality type "graph" comprises sensitive information with respect to node identities and edge weights. This sensitive information is protected generating synthetic sensitive data showing graphs with increasing similarities of neighborhoods and changing edge weights.

After data preparation, all "safe" data instances, i.e., non-sensitive data nSD, preprocessed sensitive data SDp, and synthetic sensitive data SDsyn, are collected to form the training data and passed to the model training module 22 to train the industrial foundation model. Additionally, the non-sensitive data nSD, preprocessed sensitive data SDp, and synthetic sensitive data SDsyn are stored in a database 228 for use during application of the industrial foundation model.

The industrial foundation model comprises following units, an encoder 221, a projection layer 222 for modality alignment and a large language model 223. The encoder 221 could either be modality-specific or a universal encoder that can be applied for any modality M of data instances. To align the different modalities of the training data, the projection layer 222 is trained to align data instances of different modality, like an image, a point cloud or text, to one object. For especially sensitive data SD, the encoder 221 and projection layer 222 are specific for the data provider so that only the corresponding data provider of these sensitive data instances has access to these units.

The LLM 223 is the basis of the industrial foundation model. The goal during training is to prevent memorization and overfitting as well as to decrease the probability of the generation of training data-related content as output. At least one of several different defense mechanisms 227 is applied in the LLM 223 to prevent such output. Defense mechanisms 227 include differential privacy, which injects noise to prevent the identification of individual information. Noise can be injected at different steps during the computation process, e.g., changing the input embeddings slightly or changing the gradient updates during fine-tuning. Defense mechanisms 227 include regularization, which decreases overfitting and memorization, reinforcement learning which encourages the LLM to not generate training data-related output, and federated learning which sends only updates of the LLM to the central server, but the model training data itself remains in a decentral server, e.g., controlled by the data provider. These protection mechanisms are always part of the LLM training.

After training, the model inference module 23 comprising the trained industrial foundation model can be applied to a variety of industrial use cases. In an application case, the LLM 223 receives as input at least one token 224 generated by the encoder 221 and projection layer 222 and a user prompt PRMT received via a user interface, not depicted in Fig.2. The model inference module 23 automatically amends the user prompt PRMT with a system message which serves as an input to the industrial foundation model. The system message instructs the industrial foundation model to not generate any training data-related information to be output to the user interface. Any contradicting prompts input by a user to the system 20 and resulting generated outputs of the industrial foundation model are examined and potential attacks, e.g., respective malicious prompts or output of the industrial foundation model are filtered out.

In an embodiment the model inference module 23 of the system 20 comprises a retrieval-augmented generation (RAG) unit 225 which supports in generating input to the LLM by retrieving relevant context information with respect to the input prompt that could support the generation task in the industrial foundation model. The RAG unit 225 performs a search 229 for information related to the input query in the database 228. The search result 226 is assumed to include at least partly information relevant for the input query. This relevant information is combined with the input query and provided as augmented input to the LLM 223. The LLM 223 generates an output 231 for the augmented input.

In an embodiment, the system 20 comprises a first retrieval-augmented generation unit 225 consisting of a first database of database 228, providing context information based on non-sensitive data nSD depending on the input query, i.e., the prompt PRMT and generates an amended prompt combining the query with the context information for input into the LLM.

In case user, which is also data provider, would like to directly query sensitive data, a separate RAG-instance is set up that is only accessible for the data provider. In such a case a second RAG unit is included in the system 20 consisting of a second database of database 228 providing context information based on sensitive data SD depending on the input query, generating a prompt combining the query with the context information for input into the LLM 223. The access to the second RAG unit is restricted to the at least one data provider of the sensitive data SD which is accessible in the second RAG unit 225.

The model inference module 23 comprises a metrics unit 232. The metrics unit 232 comprises one or several real-valued functions that quantifies the similarity between these two data objects. Preferably, different metrics are calculated that capture different aspects of similarity. The metrics unit 232 receives the generated output 231 and the training data, i.e., the non-sensitive data nSD, SDp, Sdsyn and/or the sensitive data and outputs similarity metrics between the generated output 231 and the training data to assess possible data leakage. Based on the calculated metrics and the capability of the industrial foundation model to perform self-evaluation see 233, the output is refined, see refinement unit 233. The refinement unit 233 filters out from the generated output 231 any knowledge that might be sensitive or data that are too similar to training data. The output is provided to an output device, which can be the user interface or a monitoring device or a controlling device of an industrial plant.

Thus, data protection functions and respective units are included in each stage in the life cycle of the industrial foundation model. In the data preparation stage, sensitivity assessment unit 211 and sensitive data pre-processing unit 212 perform privacy preserving methods 214. In the model training stage 11 defense methods 227 are applied. In the model inference stage 12 the refinement unit 233 is applied.

The described system and method are intended for industrial use cases with multiple modalities as input, while existing approaches focus mostly on textual input, sometimes also a combination of text and image. Our framework also integrates user-specific components that can be adapted depending on the user's requirements.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. System for protecting privacy of training data provided by different data providers to train a multi-modal industrial foundation model, which is applied for different industrial tasks by different users, comprising:
a) data sensitivity module (21) configured to
• identify sensitive data (21) from multi-modal training data input from different data providers and to assign at least one of several different sensitivity types (T) to the sensitive data (SD),
• preprocess the sensitive data (SD) depending on a modality (M) and the sensitivity type (T) of the sensitive data,
b) model training module (22) configured to train the industrial foundation model by
• training an encoder (221) and a projection module (222) for modality alignment using pre-processed sensitive data (SPp) and non-sensitive data (nSD) of the training data accessible for all users,
• training a large language model (223) by inputting tokens (224) generated by the encoder,
c) model inference module (23) configured to
• receive a query (230) via a user interface and input the query (230) to the trained industrial foundation model, which generates an output (231) depending on the query (230),
• automatically input a system message prompt in-structing the industrial foundation model to not output any training data-related information to an output interface,
• calculate similarity metrics which are derived from a comparison between the generated output (231) provided by the industrial foundation model and the training data, and
• provide a refined output (234) of the generated output (231) depending on the similarity metrics to an output device.

2. System according to claim 1, comprising an administration interface which is configured to receive information on the different types of sensitivity (T) depending on the modality (M) of the received training data from the data provider.

3. System according to claim 2, wherein automatically classifying the multi-modal training data into non-sensitive da-ta (nSD) and sensitive data (SD).

4. System according to claim 2 or 3, wherein automatically classifying the sensitive data (SD) into classes assigned for each of the different types of sensitivity (T).

5. System according to any of the preceding claims, wherein preprocessing the sensitive data (SD) comprises at least one of anonymization, pseudonymization, aggregation, and encryption.

6. System according to any of the preceding claims, wherein generating synthetic data (SDsyn) based on the sensitive data (SD) resembling the multi-modal training data without including any sensitive information.

7. System according to claim 6, wherein training the industrial foundation model with training data comprising non-sensitive data (nSD), pre-processed sensitive data (SDp), and synthetic data (SDsyn) and/or sensitive data (SD).

8. System according to any of the preceding claims, wherein the large language model (223) comprises defence mechanisms (227), which are at least one of differential privacy, regularization, reinforcement learning and federated learning.

9. System according to any of the preceding claims, wherein the model training module (22) is configured to train a second encoder and a second projection module for modality alignment with identified sensitive data (SD) accessible only for specific users, which are allowed to use the identified sensitive data, preferably accessible for a data provider of the sensitive data (SD) and training the large language model (223) by additionally inputting tokens generated by the second encoder.

10. System according to any of the preceding claims, comprising a first retrieval-augmented generation unit (225) consisting of a first database (228), providing context in-formation depending on the input query (230) based on non-sensitive data (nSD), and generating a prompt (PRMT) combining the query (230) with the context information for input into the LLM (223).

11. System according to claim 9, comprising a second RAG unit (225') consisting of a second database (228') providing context information based on sensitive data (SD) depending on the input query (230), generating a prompt (PRMT) combining the query (230) with the context information for input into the LLM (223).

12. System according to claim 10, wherein the access to the second RAG unit (225') is restricted to at least one data provider of the sensitive data (SD).

13. System according to any of the preceding claims, wherein an industrial task is one of controlling, monitoring, maintaining, modelling, engineering at least one device or process in an industrial environment, preferably in an automation plant.

14. Computer-implemented method for protecting privacy of training data provided by different data providers to train a multi-modal industrial foundation model (IFM), which is applied for different industrial tasks by different users, comprising the steps:
a) performed by a data sensitivity module (21),
• identify (S1) sensitive data (SD) from multi-modal training data input from different data providers and to assign at least one of several different sensitivity types (T) to the sensitive data (SD),
• preprocess (S2) the sensitive data (SD) depending on a modality (M) and the sensitivity type (T) of the sensitive data (SD),
b) performed by a model training module (22), train the industrial foundation model by
• training (S3) an encoder (EN, 221) and a projection module (222) for modality alignment using pre-processed sensitive data (SPp) and non-sensitive data (nSD) of the training data accessible for all users,
• training (S4) a large language model (LLM, 223) by inputting tokens (224) generated by the encoder (EN, 221),
c) performed by a model inference module (12),
• receive (S5) a query (230) via a user interface and input the query to the trained industrial foundation model, which generates an output (231) depending on the query (230),
• automatically input (S6) a system message prompt instructing the industrial foundation model to not output any training data-related information to an output interface,
• calculate (S7) similarity metrics which are derived from a comparison between the generated output (231) provided by the industrial foundation model and the training data, and
• provide (S8) a refined output (234) of the generated output (231) depending on the similarity metrics to an output device.

15. A computer program product directly loadable into an in-ternal memory of at least one digital computer, comprising software code portions for performing the steps of claim 14 when said product is run on said at least one digital computer.
